# EUROPÄISCHE PATENTSCHRIFT

(11) **EP 1 404 745 B1**
(45) Veröffentlichungstag und Bekanntmachung des Hinweises auf die Patenterteilung: **01.12.2004**
(21) Anmeldenummer: 02748797.4
(22) Anmeldetag: 19.06.2002
(51) Int. Cl.: C08J 5/18

(54) **POLYMERFOLIEN AUF BASIS VON POLYAZOLEN**
POLYAZOLE-BASED POLYMER FILMS
FILMS POLYMERES A BASE DE POLYAZOLE

(30) Priorität: 19.06.2001 DE 10129458
(43) Veröffentlichungstag der Anmeldung: 07.04.2004
(73) Patentinhaber: Pemeas GmbH, 65926 Frankfurt am Main (DE)
(72) Erfinder: KIEFER, Joachim, 65510 Idstein (DE); UENSAL, Oemer, 55128 Mainz (DE); BAURMEISTER, Jochen, 24340 Eckernförde (DE); JORDT, Frauke, 65817 Eppstein (DE)
(74) Vertreter: Luderschmidt, Schüler & Partner GbR
(86) Internationale Anmeldenummer: PCT/EP2002/006773
(87) Internationale Veröffentlichungsnummer: WO 2002/102881

(56) Entgegenhaltungen:
- EP-A- 0 816 415
- US-A- 4 628 067
- US-A- 5 091 087
- US-A- 5 247 010

## Beschreibung

Die vorliegende Erfindung betrifft Polymerfolien und einer daraus hergestellte Polymer-Membran mit einem verbesserten mechanischen Eigenschaftsprofil, ein Verfahren zu deren Herstellung und deren Verwendung.

Die nachfolgend beschriebene mit Säure dotierte Polymermembran kann aufgrund ihrer hervorragenden chemischen, thermischen und mechanischen Eigenschaften vielfältig eingesetzt werden und eignet sich insbesondere als Polymer-Elektrolyt-Membran (PEM) in sogenannten PEM-Brennstoffzellen.

Mit Säure dotierte Polyazol-Membranen für den Einsatz in PEM-Brennstoffzellen sind bereits bekannt. Die basischen Polyazol-Membranen werden mit konzentrierter Phosphorsäure oder Schwefelsäure dotiert und wirken als Protonenleiter und Separatoren in sogenannten Polymerelektrolyt-Membran-Brennstoffzellen (PEM-Brennstoffzellen).

Für diese Anwendung werden die mit Säure dotierten Polyazol-Membranen beidseitig mit Katalysator beschichteten Elektroden kontaktiert und bilden eine sogenannte Membran-Elektroden-Einheit (MEE). Mehrere solcher Membran-Elektroden-Einheiten werden dann zusammen mit Bipolarplatten in Reihe geschaltet und bilden den sogenannten Brennstoffzellenstapel (Stack).

Durch den seriellen Aufbau hängt die Zellspannung und Leistung des Stapels von der Anzahl an Membran-Elektroden-Einheiten ab. Andererseits bewirkt das Versagen einer einzelnen dieser Membran-Elektroden-Einheit eine Unterbrechung des Stromkreislaufes und somit ein Versagen der ganzen Brennstoffzelle. Deshalb werden außerordentlich hohe Qualitätsanforderungen an die mechanische Stabilität aller Bauteile gestellt. Insbesondere die dünne, meist <100 µm dünne Polymermembran wird dabei häufig als schwächstes Glied in dieser Kette angesehen. Die Membran erfüllt dabei zwei wesentliche Aufgaben. Zum einen muß sie eine hohe Protonenleitfähigkeit aufweisen um die bei der Oxidation eines wasserstoffreichen Brennstoffes an der Anode gebildeten Protonen zur Kathode leiten zu können. Dort findet dann die Reduktion mit Sauerstoff, vorzugsweise aus Luft, statt bei der Wasser gebildet wird. Als zweites funktioniert die Membran als Separator und soll eine sehr geringe Permeabilität für die beteiligten Brennstoffe aufweisen. Insbesondere bei Verwendung von Wasserstoff und Sauerstoff muss ein Vermischen der beiden Gase verhindert werden. Deshalb soll die Polymermembran im Betrieb auch bei hohen Temperaturen nicht versagen.
Die mechanische Stabilität des dünnen (meist <0,2 mm) Polymerfilms wird durch die Dotierung mit Säure - zur Erzeugung einer hohen Protonenleitfähigkeit - verringert. Um der Belastung der Zellen bei Betriebstemperaturen >100°C dauerhaft bestehen zu können, müssen extrem resistente Polymere verwendet werden.

Bedingt durch die hervorragenden Eigenschaften des Polyazol-Polymeren können Polymerelektrolytmembran auf Basis von Polyazolen - zu Membran-Elektroden-Einheit (MEE) verarbeitet - bei Dauerbetriebstemperaturen oberhalb 100°C insbesondere oberhalb 120°C in Brennstoffzellen eingesetzt werden. Diese hohe Dauerbetriebstemperatur erlaubt es die Aktivität der in der Membran-Elektroden-Einheit (MEE) enthaltenen Katalysatoren auf Edelmetallbasis zu erhöhen. Insbesondere bei der Verwendung von sogenannten Reformaten aus Kohlenwasserstoffen sind im Reformergas deutliche Mengen an Kohlenmonoxid enthalten, die überlicherweise durch eine aufwendige Gasaufbereitung bzw. Gasreinigung entfernt werden müssen. Durch die Möglichkeit die Betriebstemperatur zu erhöhen, können deutlich höhere Konzentrationen an CO-Verunreinigungen dauerhaft toleriert werden.

Durch Einsatz von Polymer-Elektrolyt-Membranen auf Basis von Polyazol-Polymeren kann zum einen auf die aufwendige Gasaufbereitung bzw. Gasreinigung teilweise verzichtet werden und andererseits die Katalysatorbeladung in der Membran-Elektroden-Einheit reduziert werden. Beides ist für einen Masseneinsatz von PEM-Brennstoffzellen unabdingbare Voraussetzung, da ansonsten die Kosten für ein PEM-Brennstoffzellen-System zu hoch sind.

Die bislang bekannten mit Säure dotierte Polymermembran auf Basis von Polyazolen zeigen bereits ein günstiges Eigenschaftsprofil. Aufgrund der für PEM-Brennstoffzellen angestrebten Anwendungen, insbesondere im Automobil- und Stationärbereich, sind diese insgesamt jedoch noch zu verbessern.
So zeigen die bislang bekannten Polymermembran auf Basis von Polyazolen nach ihrer Dotierung mit Säure noch - für den obigen Einsatzzweck - unzureichende mechanische Eigenschaften. Diese mechanische Instabilität zeigt sich in einem geringen E-Modul, einer geringen Reißfestigkeit und einer niedrigen Bruchzähigkeit.

Aufgabe der vorliegenden Erfindung ist mit Säure dotierte Polymermembranen auf Basis von Polyazolen bereitzustellen, die einerseits verbesserte mechanische Eigenschaften aufweisen und andererseits die Vorteile der Polymermembran auf Basis von Polyazolen aufweisen und eine Betriebstemperatur oberhalb von 100°C ohne zusätzliche Brenngasbefeuchtung ermöglichen.

Wir haben nun gefunden, daß Polymerfolien auf Basis von Polyazolen erhalten werden können die auch nach Dotierung mit einer Säure eine deutlich verbesserte mechanische Stabilität zeigen wenn zur Herstellung der Polymerfolie ausgewählte Polyazol-Rohstoffe eingesetzt werden.

Gegenstand der vorliegenden Erfindung ist daher eine Polymerfolie auf Basis von Polyazolen erhältlich durch ein Verfahren umfassend die Schritte
A) Lösen des Polyazol-Polymeren in einem polaren, aprotischen organischen Lösungsmittel,
B) Gießen einer Polymerfolie mit der aus Schritt A) erhaltenen Lösung,
C) Trocknung der in Schritt B) gebildeten Folie bis sie selbsttragend ist,
dadurch gekennzeichnet, daß in Schritt A) ein Polyazol-Polymerpulver mit einer Partikelgröße im Bereich von 300 µm bis 1500µm eingesetzt.

Das erfindungsgemäß eingesetzte Polyazol-Polymerpulver mit einer Partikelgröße im Bereich von 300 µm bis 1500µm wird durch Sieben eines kommerziell erhältlichen Polyazol-Polymeren erhalten. Polyazol-Polymere, beispielsweise auf Basis von Polybenzimidazolen, sind kommerziell erhältliche Produkte und werden unter der Bezeichnung Celazole® vertrieben.

Das kommerziell erhältliche Polyazol (Celazole, PBI Polymer) wird durch Sieben in unterschiedliche Teilchengrössen aufgespalten. Durch das Sieben wird eine komplexe Fraktionierung, wie beispielsweise in Mat. Res. Soc. Symp. Proc. 548 (1999), Seite 313-323 beschrieben, vermieden.

Überraschenderweise wird gefunden, daß die durch das Sieben erhaltenen kleinen Teilchen eine geringe Bruchzähigkeit ergeben. Dies überrascht deshalb, da kleine Teilchen ein hohes Verhältnis von Oberfläche, O, zum Volumen, V, besitzen. Bei einem Polykondensationsprozess von Polyazolen wie er beispielsweise für PBI angewendet wird, sollte der Polymerisierungsgrad jedoch mit einem zunehmenden Verhältnis O/V ansteigen: Durch gezielte Auswahl der beim Sieben erhaltenen Fraktionen können die mechanischen Eigenschaften deutlich verbessert werden.

In einer bevorzugten Ausführungsform der Erfindung werden Polyazol-Polymerpulver mit einer Partikelgröße im Bereich von 300µm bis 1250µm , insbesondere 300 µm bis 1000µm, insbesondere bevorzugt 500µm bis 1000µm, eingesetzt

Herstellung von Polymer-Lösungen auf Basis von Polyazolen gemäß Schritt A) ist im Stand der Technik eingehend beschrieben. So beschreibt EP-A-0816415 ein Verfahren zum Lösen von Polymeren auf Basis von Polyazolen unter Verwendung von N,N-Dimethylacetamid als polares, aprotisches Lösungsmittel bei Temperaturen oberhalb 260°C. Ein wesentlich schonenderes Verfahren zur Herstellung von Lösungen auf Basis von Polyazolen ist in der deutschen Patentanmeldung 10052237.8 offenbart.

Als Polymere auf Basis von Polyazolen werden Polymere enthaltend wiederkehrende Azoleinheiten der allgemeinen Formel (I) und/oder (II) 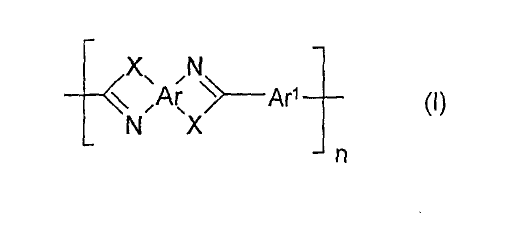 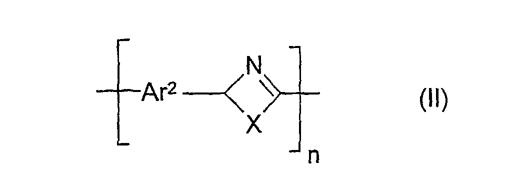 worin
- Ar: gleich oder verschieden sind und für eine vierbindige aromatische oder heteroaromatische Gruppe, die ein- oder mehrkernig sein kann,
- Ar¹: gleich oder verschieden sind und für eine zweibindige aromatische oder heteroaromatische Gruppe, die ein- oder mehrkemig sein kann,
- Ar²: gleich oder verschieden sind und für eine dreibindige aromatische oder heteroaromatische Gruppe, die ein- oder mehrkernig sein kann,
- X: gleich oder verschieden ist und für Sauerstoff, Schwefel oder eine Aminogruppe, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt

Bevorzugte aromatische oder heteroaromatische Gruppen leiten sich von Benzol, Naphthalin, Biphenyl, Diphenylether, Diphenylmethan, Diphenyldimethylmethan, Bisphenon, Diphenylsulfon, Chinolin, Pyridin, Bipyridin, Anthracen und Phenanthren, die gegebenenfalls auch substituiert sein können, ab.

Dabei ist das Substitionsmuster von Ar¹ beliebig, im Falle vom Phenylen beispielsweise kann Ar¹ ortho-, meta- und para-Phenylen sein. Besonders bevorzugte Gruppen leiten sich von Benzol und Biphenylen, die gegebenenfalls auch substituiert sein können, ab.

Bevorzugte Alkylgruppen sind kurzkettige Alkylgruppen mit 1 bis 4 Kohlenstoffatomen, wie z. B. Methyl-, Ethyl-, n- oder i-Propyl- und t-Butyl-Gruppen.

Bevorzugte aromatische Gruppen sind Phenyl- oder Naphthyl-Gruppen. Die Alkylgruppen und die aromatischen Gruppen können substituiert sein.

Bevorzugte Substituenten sind Halogenatome wie z. B. Fluor, Aminogruppen oder kurzkettige Alkylgruppen wie z. B. Methyl- oder Ethylgruppen.

Sofern im Rahmen der vorliegenden Erfindung Polyazole mit wiederkehrenden Einheiten der Form (I) eingesetzt werden, sollen die Reste X innerhalb einer wiederkehrenden Einheit gleich sein.

Die erfindungsgemäß eingesetzten Polyazole können grundsätzlich auch unterschiedliche wiederkehrende Einheiten aufweisen, die sich beispielsweise in ihrem Rest X unterscheiden. Vorzugsweise jedoch weist es nur gleiche Reste X in einer wiederkehrenden Einheit auf.

In einer bevorzugten Ausführungsform der vorliegenden Erfindung ist das Polymer enthaltend wiederkehrende Azoleinheiten ein Copolymer, das mindestens zwei Einheiten der Formel (I) und/oder (II) enthält, die sich voneinander unterscheiden.

In einer besonders bevorzugten Ausführungsform der vorliegenden Erfindung ist das Polymer enthaltend wiederkehrende Azoleinheiten ein Polyazol, das nur Einheiten der Formel (I) und/oder (II) enthält.

Die Anzahl der wiederkehrende Azoleinheiten im Polymer ist vorzugsweise eine ganze Zahl größer gleich 10. Besonders bevorzugte Polymere enthalten mindestens 100 wiederkehrende Azoleinheiten.

Im Rahmen der vorliegenden Erfindung werden Polymere enthaltend wiederkehrenden Benzimidazoleinheiten bevorzugt eingesetzt. Ein Beispiel eines äußerst zweckmäßigen Polymers enthaltend wiederkehrende Benzimidazoleinheiten wird durch Formel (III) wiedergegeben: 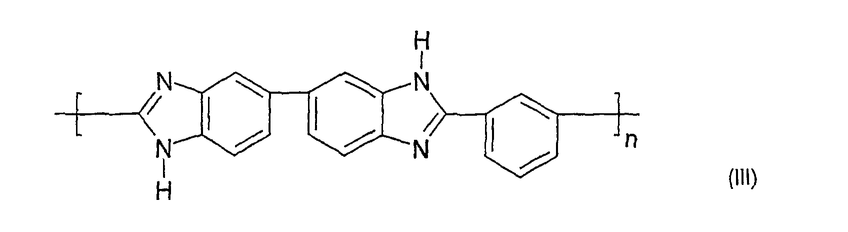 wobei n eine ganze Zahl größer gleich 10, vorzugsweise größer gleich 100 ist.

Das Gießen einer Polymerfolie (Schritt B) aus einer Polymerlösung gemäß Schritt A) erfolgt mittels an sich bekannter Maßnahmen die aus dem Stand der Technik bekannt sind.

Die Trocknung der Folie in Schritt C) erfolgt bei Temperaturen zwischen Raumtemperatur und 300°C. Die Trocknung erfolgt unter Normaldruck oder reduziertem Druck. Die Trocknungsdauer ist von der Dicke der Folie abhängig und beträgt zwischen 10 Sekunden und 24 Stunden. Die gemäß Schritt C) getrocknete Folie ist anschließend selbsttragend und kann weiterverarbeitet werden. Die Trocknung erfolgt mittels in der Folienindustrie üblichen Trocknungsverfahren.

Mit Hilfe der in Schritt C) durchgeführten Trocknung wird das polare, aprotische organische Lösungsmittel weitestgehend entfernt. So beträgt der Restgehalt an polarem, aprotischen organischen Lösungsmittel üblicherweise zwischen 10 - 23%. Eine weitere Absenkung des Rest-Lösemittelgehalten auf unter 2 Gew.-% läßt sich durch eine Erhöhung der Trocknungstemperatur und Trocknungsdauer erzielen, wobei jedoch die nachfolgende Dotierung der Folie, beispielsweise mit Phosphorsäure, deutlich verzögert wird. Somit ist ein Gehalt von Restlösemittel von 5-15% zur Reduktion der Dotierungszeit sinnvoll.

In einer Variante kann die Trocknung auch mit einem Waschritt kombiniert werden. Ein besonders schonenderes Verfahren zur Nachbehandlung und Entfernung des Restlösemittels ist in der deutschen Patentanmeldung 10109829.4 offenbart.

Die erfindungsgemäßen Polymerfolien zeigen eine überraschend hohe mechanische Stabilität, die sich in einem hohen E-Modul in Verbindung mit einer hohen Zugfestigkeit, einer hohen Bruchdehnung und Bruchzähigkeit.

Die erfindungsgemäßen Polymerfolien zeigen bei einem E-Modul von mindestens 2870 MPa eine Bruchzähigkeit von mehr als 2300 kJ/m², vorzugsweise mehr als 2320 kJ/m², bei einer Bruchdehnung mindestens 44 %.

Ein weiterer Gegenstand der vorliegenden Erfindung sind dichte oder poröse Separationsmembranen auf Basis von Polyazolen erhältlich durch ein Verfahren umfassend die Schritte
A) Lösen des Polyazol-Polymeren in einem polaren, aprotischen organischen Lösungsmittel,
B) Gießen einer Polymerfolie mit der aus Schritt A) erhaltenen Lösung,
C) Eintauchen dieser Folie in ein Fällungsbad
dadurch gekennzeichnet, daß in Schritt A) ein Polyazol-Polymerpulver mit einer Partikelgröße im Bereich von 300 µm bis 1500µm eingesetzt wird.

Auch bei diesem Gegenstand der Erfindung werden bevorzugt Polyazol-Polymerpulver mit einer Partikelgröße im Bereich von 300µm bis 1250µm, insbesondere 300 µm bis 1000µm, insbesondere bevorzugt 500µm bis 1000µm, eingesetzt.

Die bevorzugten Polymerstrukturen der Formeln (I) und (II) sind auch für diesen Gegenstand gegeben.

Für weitere Informationen über Separationsmembranen auf Basis von Polyazolen wird auf die Fachliteratur, insbesondere auf die Patente WO 98/14505; US-A-4693815; US-A-4693824; US-A-375262; US-A-3737042; US-A-4512894; US-A-448687; US-A-3841492 verwiesen. Die in den vorstehend genannten Literaturstellen enthaltene Offenbarung hinsichtlich des Aufbaues und der Herstellung von Separationsmembranen wird durch die vorliegende Erfindung mit umfaßt und ist Bestandteil der vorliegenden Beschreibung. Insbesondere können solche Separationsmembranen in Form von flachen Filmen oder als Hohlfasermembranen hergestellt werden.

Je nach gewünschter Spezifikation der Separationsmembran kann nach Schritt B) eine Trockung der gebildeten Polymerfolie erfolgen bevor diese in das Fällungsbad (Schritt C) zugeführt wird. Die Trockung ermöglicht ein besseres Handling der Polymerfolie. Zusätzlich kann durch die Trocknung die Morphologie der Membran eingestellt werden. Zum besseren Handling der Polymerfolie kann die Folienbildung in Schritt B) auf einem Träger erfolgen. Anschließend wird die gebildete Polymerfolie die in der Regel noch nicht selbsttragend sein kann dem Fällungsbad zugeführt. Auf diese Art und Weise können beispielsweise asymmetrische Aufbauten erzeugt werden.

Neben den bekannten Vorteilen von Separationsmembranen auf Basis von Polyazolen, wie hohe Temperatur- und Chemikalienbeständigkeit, besitzen die erfindungsgemässen Separationsmembranen verbesserte mechanische Eigenschaften infolge eines höheren Molekulargewichtes die zu einer erhöhten Langzeitstabilität und Lebensdauer sowie einem verbesserten Separationsverhalten führen.

Solche Separationsmembranen können als dichte Polymerfilme, poröse Hohlfasermembranen oder als poröse, offenzellige Polymerfilme gegebenfalls mit kompakter Deckschicht durch Eintauchen in das Fällungsbad hergestellt werden. Das Fällungsbad besteht aus einem oder mehreren Nicht-Lösemittel für das Polyazol und gegebenfalls einem oder mehreren Lösemitteln. Nicht limitierende Beispiele für Nicht-Lösemittel für Polyazole sind Wasser, Aceton, Glykole, Alkohole, bevorzugt Methanol oder Benzyalkohol, sowie andere nicht wasserlösliche Lösemittel. Nicht limitierende Beispiele für Lösemittel für Polyazole sind DMAc, NMP, DMF, DMSO sowie starke Säuren wie Schwefelsäure, Methansulfonsäure oder Trifluoressigsäure.

Zur Herstellung einer porösen Membran kann die Polymerlösung aus Schritt A) ebenfalls ein Nicht-Lösemittel oder auch sogenannte Porenbildner wie zum Beispiel Glycerin enthalten.
Bei der Fällung in Schritt C) kommt es durch Lösemittelaustausch zur Ausbildung bekannter poröser Strukturen. Je nach Wahl der Zusammensetzung des Fällmittels können somit unterschiedliche Morphologien der Separationsmembranen herbeigeführt werden. Für Separationsanwendungen werden folgende Strukturen bevorzugt: i) symmetrische, poröse Struktur; ii) Asymmetrische poröse Struktur mit einer Polymerverdichtung nahe einer Membranoberfläche. Rasterelektronenmikroskopische Aufnahmen solcher besonders geeigneter Strukturen von Polybenzimidazolmembran sind in Journal of Membrane Science Band 20 ,1984, Seiten 147-66 offenbart.

Solche Phaseninversionsmembranen und Strukturen sind dem Fachmann bekannt. Membranen mit symmetrischer poröser Struktur werden angewendet als Separations- bzw. Filtrationsmembranen für Luft und Gasfiltration oder der Mikrooder Ultrafiltration für Flüssigkeiten. Membranen mit asymmetrischer, poröser Struktur können vielseitig zur Umkehrosmose insbesondere Wasserentsalzung, Dialyse oder Gasaufbereitung benutzt werden.

Eine besonders zweckmässige Anwendung ist die Separation von Wasserstoff und Kohlendioxid aus Gasgemischen in Kombination mit einem porösen metallischen Träger. Alternative Technologien zur CO₂-Trennung benötigen wegen der geringen thermischen Stabilität der Polymermembran eine Abkühlung des Gases auf 150°C wodurch der Wirkungsgrad verringert wird. Die erfindungsgemässen Separationsmembranen auf Basis von Polyazolen können bis zu einer Temperatur von 400°C dauerhaft betrieben werden und führen so zu einer Erhöhung der Ausbeute und einer Verringerung der Kosten.

Die erfindungsgemäße Polymerfolien können nach entsprechender Dotierung protonenleitend ausgerüstet werden.

Ein weiterer Gegenstand der vorliegenden Erfindung ist somit eine dotierte Polymermembran auf Basis von Polyazolen erhältlich durch ein Verfahren umfassend die Schritte
A) Lösen des Polyazol-Polymeren in einem polaren, aprotischen organischen Lösungsmittel,
B) Gießen einer Polymerfolie mit der aus Schritt A) erhaltenen Lösung,
C) Trocknung der in Schritt B) gebildeten Folie bis sie selbsttragend ist,
D) Dotierung der gemäß Schritt C) erhaltenen Polymerfolie mit einem Dotierungsmittel,
dadurch gekennzeichnet, daß in Schritt A) ein Polyazol-Polymerpulver mit einer Partikelgröße im Bereich von 300 µm bis 1500µm eingesetzt.

In einer bevorzugten Ausführungsform der Erfindung werden Polyazol-Polymerpulver mit einer Partikelgröße im Bereich von 300µm bis 1250µm , insbesondere 300 µm bis 1000µm, insbesondere bevorzugt 500µm bis 1000µm, eingesetzt

Die bevorzugten Polymerstrukturen der Formeln (I) und (II) sind auch für diesen Gegenstand gegeben.

Gemäß Schritt D) wird die Dotierung der gemäß Schritt C) erhaltenen Polymerfolie durchgeführt. Hierzu wird die Folie mit einem Dotierungsmittel benetzt oder in diesem eingelegt. Als Dotierungsmittel für die erfindungsgemäßen Polymermembranen werden Säuren vorzugsweise alle bekannten Lewis- und Brønsted-Säuren, insbesondere anorganische Lewis- und Brønsted-Säuren eingesetzt.
Neben diesen vorstehend genannten Säure ist auch der Einsatz von Polysäuren möglich, insbesondere lsopolysäuren und Heteropolysäuren sowie von Mischungen verschiedener Säuren. Dabei bezeichnen im Sinne der vorliegenden Erfindung Heteropolysäuren anorganische Polysäuren mit mindestens zwei verschiedenen Zentralatomen, die aus jeweils schwachen, mehrbasischen Sauerstoff-Säuren eines Metalls (vorzugsweise Cr, Mo, V, W) und eines Nichtmetalls (vorzugsweise As, I, P, Se, Si, Te) als partielle gemischte Anhydride entstehen. Zu ihnen gehören unter anderen die 12-Molybdatophosphorsäure und die 12-Wolframatophosphorsäure.

Als Polymerfolie kann zur Dotierung in Schritt D) auch eine Separationsmembran aus dem erfindungsgemässen Polyazolen eingesetzt werden. Dies führt, wie in WO98/14505 beschrieben, aufgrund der erhöhten Porösität zu einer Verringerung der Dotierungszeit, einer erhöhten Säurebeladung und einer weiterhin verbesserten Leitfähigkeit.

Erfindungsgemäß besonders bevorzugte Dotierungsmittel sind Schwefelsäure und Phosphorsäure. Ein ganz besonders bevorzugtes Dotierungsmittel ist Phosphorsäure (H₃PO₄).

Die erfindungsgemäßen Polymermembranen sind dotiert. Im Rahmen der vorliegenden Erfindung bezeichnen dotierte Polymermembranen solche Polymermembranen, die aufgrund der Gegenwart von Dotierungsmitteln eine erhöhte Protonenleitfähigkeit im Vergleich mit den nicht dotierten Polymermembranen zeigen.

Verfahren zur Herstellung von dotierten Polymermembran sind bekannt. In einer bevorzugten Ausführungsform der vorliegenden Erfindung werden sie erhalten, indem man eine Folie des betreffenden Polymeren über eine geeignete Zeit, vorzugsweise 5 Minuten - 96 Stunden, besonders bevorzugt 1-72 Stunden, bei Temperaturen zwischen Raumtemperatur und 100°C und gegebenenfalls erhöhtem Druck mit konzentrierter Säure, vorzugsweise mit hochkonzentrierter Phosphorsäure benetzt.

Über den Dotierungsgrad kann die Leitfähigkeit der erfindungsgemäßen Polymermembran beeinflußt werden. Dabei nimmt die Leitfähigkeit mit steigender Konzentration an Dotierungsmittel solange zu, bis ein maximaler Wert erreicht ist. Erfindungsgemäß wird der Dotierungsgrad angegeben als Mol Säure pro Mol Wiederholungseinheit des Polymers. Im Rahmen der vorliegenden Erfindung ist ein Dotierungsgrad zwischen 3 und 15, insbesondere zwischen 6 und 12, bevorzugt.

Die erfindungsgemäße Polymermembran weist verbesserte Materialeigenschaften gegenüber den bisher bekannten dotierten Polymermembranen aus Basis von kommerziell erhältlichem Polyazol auf. Insbesondere besitzen sie sehr gute mechanische Eigenschaften.

Insbesondere bei Verwendung von Polyazol-Polymerpulver mit einer Partikelgröße im Bereich von 500 µm bis 1000µm zeigen die mit Säure dotierten Polymermembranen eine deutlich verbesserte Bruchdehnung von mindestens 40 %, vorzugsweise von 40 bis 65%..

Zu möglichen Einsatzgebieten der erfindungsgemäßen, dotierten Polymermembranen gehören unter anderem die Verwendung in Brennstoffzellen, bei der Elektrolyse, in Kondensatoren und in Batteriesystemen. Aufgrund ihres Eigenschaftsprofils werden die dotierten Polymermembranen vorzugsweise in Brennstoffzellen verwendet.

Die vorliegende Erfindung betrifft auch eine Membran-Elektroden-Einheit, die mindestens eine erfindungsgemäße Polymermembran aufweist. Für weitere Informationen über Membran-Elektroden-Einheiten wird auf die Fachliteratur, insbesondere auf die Patente US-A-4,191,618, US-A-4,212,714 und US-A-4,333,805 verwiesen. Die in den vorstehend genannten Literaturstellen [US-A-4,191,618, US-A-4,212,714 und US-A-4,333,805] enthaltene Offenbarung hinsichtlich des Aufbaues und der Herstellung von Membran-Elektroden-Einheiten ist auch Bestandteil der Beschreibung.

Nachfolgend wird die Erfindung durch Beispiele und Vergleichsbeispiel eingehender erläutert, ohne daß die Erfindung auf diese Beispiele beschränkt werden soll.

### Beispiele:

Ein kommerzielles Polymer (Celazole, PBI-Polymer), welches als Pulver vorliegt wird mittels eines Siebturms in unterschiedliche Fraktionen aufgeteilt. Die Ergebnisse der Siebanalyse sind in Tabelle 1 dargestellt. Die so erhaltenen Siebfraktionen werden einzeln getrocknet. Sobald der Wassergehalt jeder Siebfraktion <0,1 % ist, wird daraus durch Mischen in Dimethylacetamid mit einer im Stand der Technik beschriebenen Methode in Lösung gebracht. Dabei wird beobachtet, daß Teilchen mit einer Größe >1500 µm nur unvollständig in Lösung gebracht werden können.
Deshalb sollen Teilchen mit einer Größe >1500 µm nicht zur Lösungsherstellung verwendet werden.
Von jeder Lösung hergestellt mit einer separaten Siebfraktion wird dann ein Film mit herkömmlichen technischen Verfahren gegossen oder von Hand gerakeit.
Die so hergestellten Filme werden durch Eintauchen in 85% H₃PO₄ bei Raumtemperatur während 72h dotiert.

### Ergebnisse:

**Tabelle 1:**

| Ergebnisse der Siebanalyse eines kommerziellen PBI Polymers | |
|---|---|
| Siebfraktion | Anteil (Gewichtsprozent) |
| <200 µm | 6 |
| 200-300 µm | 15 |
| 300-500 µm | 43 |
| 500-750 µm | 15 |
| 750-1000 µm | 11 |
| 1000-1500 µm | 7 |
| >1500 µm | 3 |

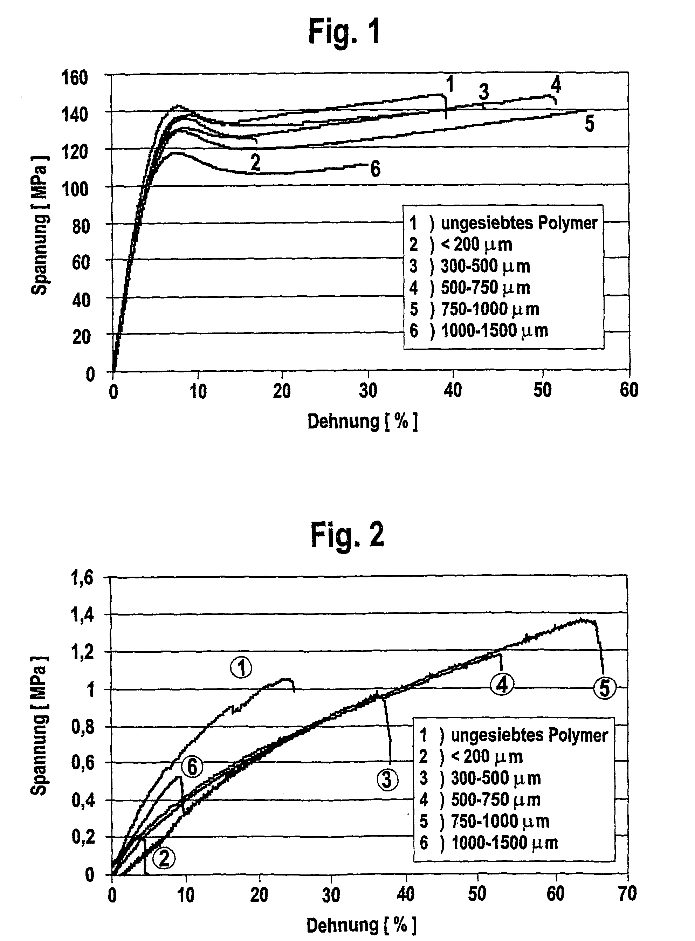

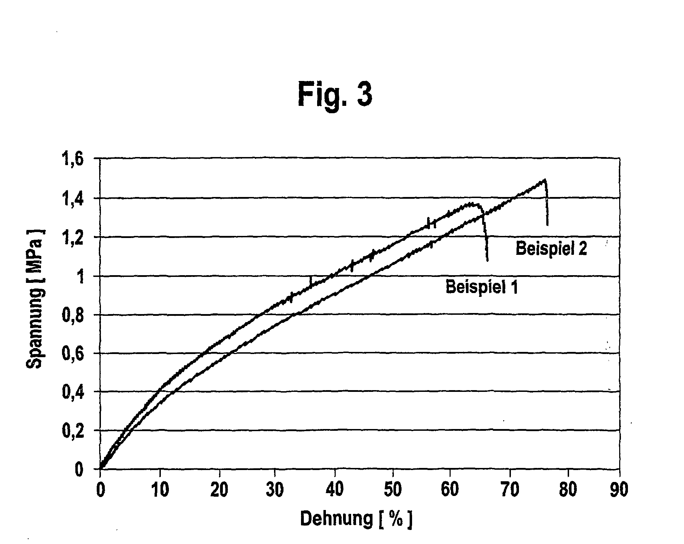

Mechanische Eigenschaften von kommerziellen PBI Filmen
Zur Bestimmung der mechanischen Eigenschaften werden aus den Filmen Prüfköper des Typs 1B gemäß ISO 527-3 ausgestanzt und mittels eines uniaxialen Zugversuches mit einer Zwick Universalprüfmaschine Typ S100 untersucht. Die Deformationsgeschwindigkeit beträgt 5 mm/min und die Prüftemperatur wird auf 160°C eingestellt um für die Brennstoffzellenanwendung typische Temperaturen zu realisieren. Pro Probenzusammensetzung werden mindestens 5 Zugversuche durchgeführt und ein statistischer Mittelwert bestimmt.
Exemplarische Zugkurven von Filmen hergestellt mit einzelnen Siebfraktionen sind in Figur 1 gezeigt. Die so erhaltenen Daten sind in Tabelle 2 zusammengefasst.

Es wird gefunden, daß die Bruchzähigkeit stark von der Siebfraktion abhängt. Insbesondere werden hohe Bruchzähigkeiten mit Filmen erzielt die mit Siebfraktionen im Bereich 300-1000 µm hergestellt wurden.

**Tabelle 2:**

| Ergebnis der Zugversuche an Filmen hergestellt aus unterschiedlichen Siebfraktionen | | | | | | |
|---|---|---|---|---|---|---|
| Polymerfraktion | Ungesiebtes Polymer | <200 µm | 300-500 µm | 500-750 µm | 750-1000 µm | 1000-1500 µm |
| Anzahl der Messungen | 6 | 5 | 5 | 5 | 5 | 6 |
| E-Modul [MPa] | 2850 | 2910 | 2870 | 2875 | 2661 | 2780 |
| Zugfestigkeit [MPa] | 147 | 139 | 141 | 148 | 149 | 123 |
| Bruchdehnung [%] | 42 | 20 | 44 | 49 | 61 | 30 |
| Bruchzähigkeit [kJ/m²] | 2268 | 892 | 2320 | 2528 | 2910 | 1281 |

Mechanische Eigenschaften von säuredotierten Membranen
Nach der Dotierung mit Säure werden streifenförmige Proben mit einer Breite von 15mm und Länge von 120 mm hergestellt und mittels Zugversuch bei T=100°C mit einer Dehngeschwindigkeit von 50 mm/min getestet. Exemplarische Zugkurven sind in Figur 3 gezeigt und die Ergebnisse der Analyse sind in Tabelle 3 zusammengefaßt.

Die Proben die mit den Siebfraktionen <200 µm und 200-300 µm erhalten wurden sind mechanisch sehr instabil und reißen schon bei sehr geringen Spannungen. Mit diesem Feinanteil können nur unzureichende mechanische Eigenschaften erreicht werden. Wie bei den Filmen beobachtet man auch bei den Membranen die besten mechanischen Eigenschaften bei den Materialien die aus Pulvern im Bereich 300-1000 µm hergestellt wurden. Überraschenderweise wird ebenfalls gefunden, daß die Verwendung von Teilchen >1000 µm dann zu einer Verschlechterung der mechanischen Eigenschaften führt.

**Tabelle 3:**

| Ergebnis der Zugversuche an säuredotierten PBI Membranen hergestellt aus unterschiedlichen Siebfraktionen | | | | | | | |
|---|---|---|---|---|---|---|---|
| Polymerfraktion | Ungesiebtes Polymer | <200 µm¹ | 200-300 µm¹ | 300-500 µm | 500-750 µm | 750-1000 µm | 1000-1500 µm |
| Anzahl der Messungen | 5 | 3 | 5 | 5 | 5 | 5 | |
| E-Modul [MPa] | 8,2 | 5 | 5,1 | 3 | 5,2 | 4,2 | 5,3 |
| Zugfestigkeit [MPa] | 1,2 | <0,5 | 0,2 | 0,9 | 1,2 | 1,6 | 0,5 |
| Bruchdehnung [%] | 26 | <5 | 5 | 40 | 48 | 65 | 11 |
| Bruchzähigkeit [kJ/m²] | 21,6 | <1 | 0,6 | 19,4 | 20,5 | 56 | 3,1 |

| | | | | | | | |
|---|---|---|---|---|---|---|---|
| ¹⁾ Mehrere Proben reißen bei noch kleineren Kräften und konnten messtechnisch nicht ausgewertet werden | | | | | | | |

Die spezifische Leitfähigkeit wird mittels Impedanzspektroskopie in einer 4-Pol-Anordnung im potentiostatischen Modus und unter Verwendung von Platinelektroden (Draht, 0,25 mm Durchmesser) gemessen. Der Abstand zwischen den stromabnehmenden Elektroden beträgt 2 cm. Das erhaltene Spektrum wird mit einem einfachen Modell bestehend aus einer parallelen Anordnung eines ohm'schen Widerstandes und eines Kapazitators ausgewertet. Der Probenquerschnitt der phosphorsäuredotierten Membran wird unmittelbar vor der Probenmontage gemessen. Zur Messung der Temperaturabhängigkeit wird die Messzelle in einem Ofen auf die gewünschte Temperatur gebracht und über eine in unmittelbarer Probennähe positioniertes Pt-100 Thermoelement geregelt. Nach Erreichen der Temperatur wird die Probe vor dem Start der Messung 10 Minuten auf dieser Temperatur gehalten.

Überraschenderweise wird gefunden, daß insbesondere im Temperaturbereich >100°C mit den Siebfraktionen hergestellte Membranen höhere Leitfähigkeiten aufweisen als eine Membran die mit dem ungesiebten Polymer hergestellt wurde.

**Tabelle 3:**

| Spezifische Leitfähigkeit (S/cm) von phosphorsäuredotierten PBI Membranen hergestellt aus verschiedenen Siebfraktionen | | | | | | | |
|---|---|---|---|---|---|---|---|
| T (°C) | ungesiebtes Polymer | <200 µm | 200-300 µm | 300-500 µm | 500-750 µm | 750-1000 µm | 1000-1500 µm |
| 25 | 0,053 | 0,073 | 0,051 | 0,049 | 0,050 | 0,048 | 0,037 |
| 40 | | 0,066 | 0,069 | 0,062 | 0,064 | 0,050 | 0,054 |
| 60 | 0,040 | 0,052 | 0,059 | 0,060 | 0,061 | 0,042 | 0,051 |
| 80 | 0,043 | 0,058 | 0,062 | 0,056 | 0,057 | 0,051 | 0,053 |
| 100 | 0,062 | 0,077 | 0,084 | 0,069 | 0,070 | 0,071 | 0,068 |
| 120 | 0,077 | 0,089 | 0,103 | 0,091 | 0,089 | 0,091 | 0,088 |
| 140 | 0,075 | 0,090 | 0,109 | 0,097 | 0,091 | 0,092 | 0,091 |
| 160 | 0,073 | 0,089 | 0,105 | 0,099 | 0,085 | 0,090 | 0,090 |

### Beispiel 2 (erfindungsgemäß)

Von einem kommerziellen PBI Polymer (Celazole) wird durch Sieben der Feinanteil (<300 µm) und der Grobanteil (>1250 µm) abgetrennt. Dieses Polymer wird dann getrocknet und eine Lösung hergestellt. Aus der Lösung wird ein Film mit herkömmlichen Verfahren hergestellt. Der Film wird anschließend während 72 Stunden (h) in 85% Phosphorsäure dotiert und somit eine Membran erhalten. Wie in Figur 3 vergleichend gezeigt findet man, daß die mechanischen Eigenschaften einer solchen Membran fast identisch mit der besten Membran aus Beispiel 1 sind. Es wird ebenfalls eine maximale Leitfähigkeit von 0,09S/cm bei einer Temperatur von 120°C gemessen.

## Patentansprüche

1. Polymerfolie auf Basis von Polyazolen erhältlich durch ein Verfahren umfassend die Schritte
A) Lösen des Polyazol-Polymeren in einem polaren, aprotischen organischen Lösungsmittel,
B) Gießen einer Polymerfolie mit der aus Schritt A) erhaltenen Lösung,
C) Trocknung der in Schritt B) gebildeten Folie bis sie selbsttragend ist,
**dadurch gekennzeichnet, daß** in Schritt A) ein Polyazol-Polymerpulver mit einer Partikelgröße im Bereich von 300 µm bis 1500µm eingesetzt.

2. Polymerfolie gemäß Anspruch 1, **dadurch gekennzeichnet, daß** ein Polyazol-Polymerpulver mit einer Partikelgröße im Bereich von 300µm bis 1250µm, insbesondere 300 µm bis 1000µm, insbesondere bevorzugt 500µm bis 1000µm eingesetzt wird.

3. Polymerfolie gemäß Anspruch 1 oder 2, **dadurch gekennzeichnet, daß** als Polymere auf Basis von Polyazolen Polymere enthaltend wiederkehrende Azoleinheiten der allgemeinen Formel (I) und/oder (II) 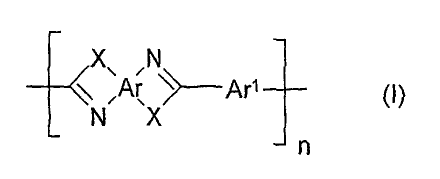 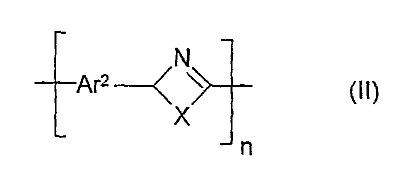 worin
Ar gleich oder verschieden sind und für eine vierbindige aromatische oder heteroaromatische Gruppe, die ein- oder mehrkernig sein kann,
Ar¹ gleich oder verschieden sind und für eine zweibindige aromatische oder heteroaromatische Gruppe, die ein- oder mehrkernig sein kann,
Ar² gleich oder verschieden sind und für eine dreibindige aromatische oder heteroaromatische Gruppe, die ein- oder mehrkernig sein kann,
X gleich oder verschieden ist und für Sauerstoff, Schwefel oder eine Aminogruppe, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt, eingesetzt werden.

4. Polymerfolie gemäß Anspruch 3, **dadurch gekennzeichnet, daß** als Polymere auf Basis von Polyazolen Polymere enthaltend wiederkehrende Benzimidazoleinheiten gemäß Formel (III) 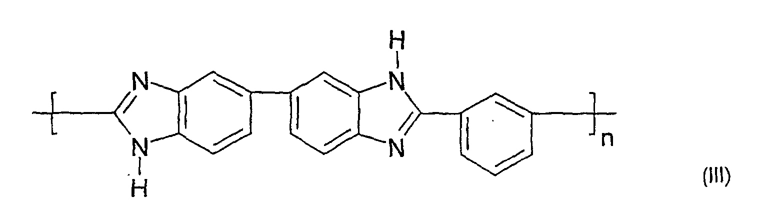 wobei n eine ganze Zahl größer gleich 10, vorzugsweise größer gleich 100 ist, eingesetzt werden

5. Polymerfolie gemäß einem der Ansprüche 1 bis 4, **dadurch gekennzeichnet, daß** die Trocknung der Folie in Schritt C) bei Temperaturen zwischen Raumtemperatur und 300°C erfolgt

6. Polymerfolie gemäß einem der Ansprüche 1 bis 4, **dadurch gekennzeichnet, daß** die Trocknung der Folie in Schritt C) über einen Zeitraum von 10 Sekunden bis 24 Stunden erfolgt.

7. Dotierte Polymermembran auf Basis von Polyazolen erhältlich durch ein Verfahren umfassend die Schritte
A) Lösen des Polyazol-Polymeren in einem polaren, aprotischen organischen Lösungsmittel,
B) Gießen einer Polymerfolie mit der aus Schritt A) erhaltenen Lösung,
C) Trocknung der in Schritt B) gebildeten Folie bis sie selbsttragend ist,
D) Dotierung der gemäß Schritt C) erhaltenen Polymerfolie mit einem Dotierungsmittel,
**dadurch gekennzeichnet, daß** in Schritt A) ein Polyazol-Polymerpulver mit einer Partikelgröße im Bereich von 300 µm bis 1500µm eingesetzt.

8. Polymermembran gemäß Anspruch 7, **dadurch gekennzeichnet, daß** ein Polyazol-Polymerpulver mit einer Partikelgröße im Bereich von 300µm bis 1250µm , insbesondere 300 µm bis 1000µm, insbesondere bevorzugt 500µm bis 1000µm, eingesetzt wird.

9. Polymermembran gemäß Anspruch 7 oder 8, **dadurch gekennzeichnet, daß** als Polymere auf Basis von Polyazolen Polymere enthaltend wiederkehrende Azoleinheiten der allgemeinen Formel (I) und/oder (II) 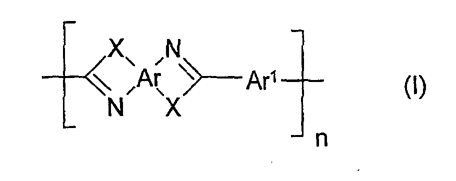 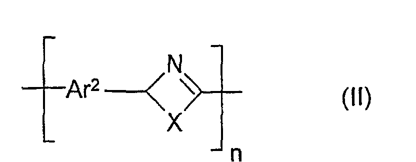 worin
Ar gleich oder verschieden sind und für eine vierbindige aromatische oder heteroaromatische Gruppe, die ein- oder mehrkernig sein kann,
Ar¹ gleich oder verschieden sind und für eine zweibindige aromatische oder heteroaromatische Gruppe, die ein- oder mehrkernig sein kann,
Ar² gleich oder verschieden sind und für eine dreibindige aromatische oder heteroaromatische Gruppe, die ein- oder mehrkernig sein kann,
X gleich oder verschieden ist und für Sauerstoff, Schwefel oder eine Aminogruppe, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt, eingesetzt werden.

10. Polymermembran gemäß Anspruch 7, **dadurch gekennzeichnet, daß** als Polymere auf Basis von Polyazolen Polymere enthaltend wiederkehrende Benzimidazoleinheiten gemäß Formel (III) 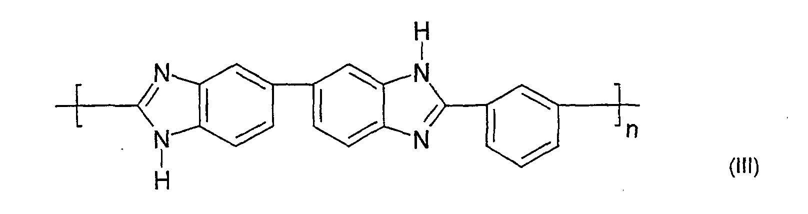 wobei n eine ganze Zahl größer gleich 10, vorzugsweise größer gleich 100 ist, eingesetzt werden

11. Polymermembran gemäß einem der Ansprüche 7 bis 10, **dadurch gekennzeichnet, daß** die Trocknung der Folie in Schritt C) bei Temperaturen zwischen Raumtemperatur und 300°C erfolgt

12. Polymermembran gemäß einem der Ansprüche 7 bis 10, **dadurch gekennzeichnet, daß** die Trocknung der Folie in Schritt C) über einen Zeitraum von 10 Sekunden bis 24 Stunden erfolgt.

13. Polymermembran gemäß einem der Ansprüche 7 bis 10, **dadurch gekennzeichnet, daß** die Dotierung über einen Zeitraum von 5 Minuten bis 96 Stunden erfolgt.

14. Polymermembran gemäß einem der Ansprüche 7 bis 10, **dadurch gekennzeichnet, daß** der Dotierungsgrad zwischen 3 und 15 Mol Säure pro Mol Wiederholungseinheit des Polymers beträgt.

15. Polymermembran gemäß einem der Ansprüche 7 bis 14, **dadurch gekennzeichnet, daß** als Dotierungsmittel Schwefelsäure und Phosphorsäure eingesetzt wird

16. Membran-Elektroden-Einheit, die mindestens eine Polymermembran gemäß einem der Ansprüche 7 bis 15 und mindestens eine Elektrode aufweist.

17. Polymerelektrolyt-Brennstoffzelle die mindestens eine Membran-Elektroden-Einheit gemäß Anspruch 16 aufweist.

18. Separationsmembranen auf Basis von Polyazolen erhältlich durch ein Verfahren umfassend die Schritte
A) Lösen des Polyazol-Polymeren in einem polaren, aprotischen organischen Lösungsmittel,
B) Gießen einer Polymerfolie mit der aus Schritt A) erhaltenen Lösung,
C) Eintauchen dieser Folie in ein Fällungsbad
**dadurch gekennzeichnet, daß** in Schritt A) ein Polyazol-Polymerpulver mit einer Partikelgröße im Bereich von 300 µm bis 1500µm eingesetzt wird.

19. Separationsmembran gemäß Anspruch 18, **dadurch gekennzeichnet, daß** daß ein Polyazol-Polymerpulver mit einer Partikelgröße im Bereich von 300µm bis 1250µm , insbesondere 300 µm bis 1000µm, insbesondere bevorzugt 500µm bis 1000µm, eingesetzt wird.

20. Verwendung der Separationsmembran gemäß Anspruch 19 zur Filtration und/oder Separation von Gasen und/der Flüssigkeiten oder in der Umkehrosmose.

21. Vorrichtung zur Filtration und/oder Separation von Gasen und/der Flüssigkeiten enthaltend mindestens eine Separationsmembran gemäß Anspruch 18.

22. Vorrichtung zum Betrieb einer Umkehrosmose enthaltend mindestens eine Separationsmembran gemäß Anspruch 18

## Claims

1. A polymer film based on polyazoles which is obtainable by a process comprising steps
A) dissolving the polyazole polymer in a polar, aprotic organic solvent,
B) casting a polymer film using the solution obtained from step A),
C) drying the film formed in step B) until it is self-supporting,
wherein a polyazole polymer powder having a particle size in the range from 300 µm to 1500µm is used in step A).

2. A polymer film as claimed in claim 1, wherein a polyazole polymer powder having a particle size in the range from 300 µm to 1250 µm, in particular from 300 µm to 1000 µm, particularly preferably from 500 µm to 1000 µm, is used.

3. A polymer film as claimed in claim 1 or 2, wherein the polyazole-based polymer used is a polymer comprising recurring azole units of the formula (I) and/or (II) 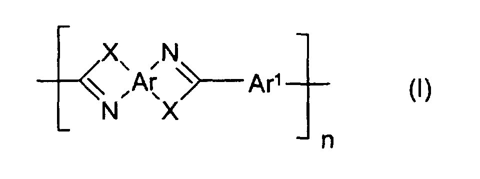 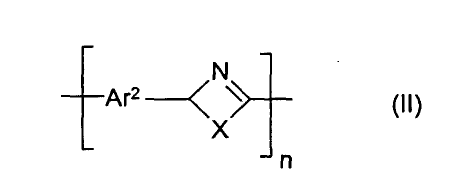 where
Ar are identical or different and are each a tetravalent aromatic or heteroaromatic group which can be monocyclic or polycyclic,
Ar¹ are identical or different and are each a divalent aromatic or heteroaromatic group which can be monocyclic or polycyclic,
Ar² are identical or different and are each a trivalent aromatic or heteroaromatic group which can be monocyclic or polycyclic,
X are identical or different and are each oxygen, sulfur or an amino group bearing a hydrogen atom, a group having 1-20 carbon atoms, preferably a branched or unbranched alkyl or alkoxy group, or an aryl group as further radical.

4. A polymer film as claimed in claim 3, wherein the polyazole-based polymer used is a polymer comprising recurring benzimidazole units of the formula (III) 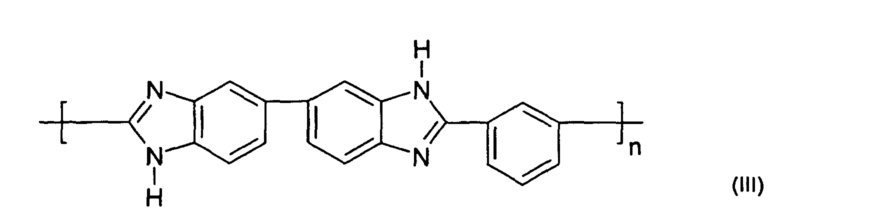 where n is an integer greater than or equal to 10, preferably greater than or equal to 100.

5. A polymer film as claimed in any of claims 1 to 4, wherein drying of the film in step C) is carried out at temperatures in the range from room temperature to 300°C.

6. A polymer film as claimed in any of claims 1 to 4, wherein drying of the film in step C) is carried out for a period of from 10 seconds to 24 hours.

7. A doped polymer membrane based on polyazoles which is obtainable by a process comprising the steps
A) dissolving the polyazole polymer in a polar, aprotic organic solvent,
B) casting a polymer film using the solution obtained from step A),
C) drying the film formed in step B) until it is self-supporting,
D) doping the polymer film obtained in step C) with a dopant,
wherein a polyazole polymer powder having a particle size in the range from 300 µm to 1500 µm is used in step A).

8. A polymer membrane as claimed in claim 7, wherein a polyazole polymer powder having a particle size in the range from 300 µm to 1250 µm, in particular from 300 µm to 1000 µm, particularly preferably from 500 µm to 1000 µm, is used.

9. A polymer membrane as claimed in claim 7 or 8, wherein the polyazole-based polymer used is a polymer comprising recurring azole units of the formula (I) and/or (II) 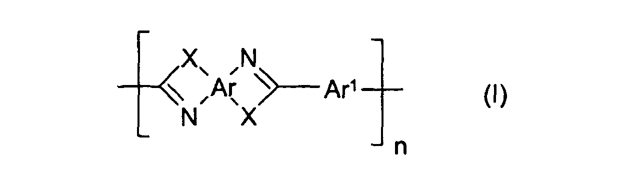 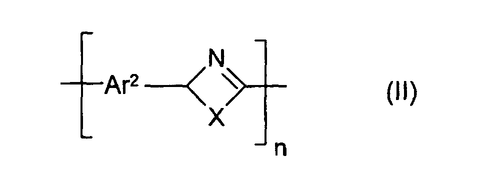 where
Ar are identical or different and are each a tetravalent aromatic or heteroaromatic group which can be monocyclic or polycyclic,
Ar¹ are identical or different and are each a divalent aromatic or heteroaromatic group which can be monocyclic or polycyclic,
Ar² are identical or different and are each a trivalent aromatic or heteroaromatic group which can be monocyclic or polycyclic,
X are identical or different and are each oxygen, sulfur or an amino group bearing a hydrogen atom, a group having 1-20 carbon atoms, preferably a branched or unbranched alkyl or alkoxy group, or an aryl group as further radical.

10. A polymer membrane as claimed in claim 7, wherein the polyazole-based polymer used is a polymer comprising recurring benzimidazole units of the formula (III) 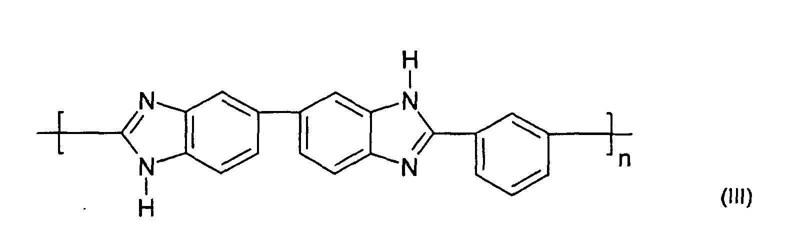 where n is an integer greater than or equal to 10, preferably greater than or equal to 100.

11. A polymer membrane as claimed in any of claims 7 to 10, wherein drying of the film in step C) is carried out at temperatures in the range from room temperature to 300°C.

12. A polymer membrane as claimed in any of claims 7 to 10, wherein drying of the film in step C) is carried out for a period of from 10 seconds to 24 hours.

13. A polymer membrane as claimed in any of claims 7 to 10, wherein doping is carried out for a period of from 5 minutes to 96 hours.

14. A polymer membrane as claimed in any of claims 7 to 10, wherein the degree of doping is from 3 to 15 mol of acid per mol of repeating units of the polymer.

15. A polymer membrane as claimed in any of claims 7 to 14, wherein the dopant used is sulfuric acid or phosphoric acid.

16. A membrane-electrode unit comprising at least one polymer membrane as claimed in any of claims 7 to 15 and at least one electrode.

17. A polymer electrolyte fuel cell comprising at least one membrane-electrode unit as claimed in claim 16.

18. A polyazole-based separation membrane obtainable by a process comprising the steps
A) dissolving the polyazole polymer in a polar, aprotic organic solvent,
B) casting a polymer film using the solution obtained from step A),
C) dipping this film into a precipitation bath
wherein a polyazole polymer powder having a particle size in the range from 300 µm to 1500 µm is used in step A).

19. A separation membrane as claimed in claim 18, wherein a polyazole polymer powder having a particle size in the range from 300 µm to 1250 µm, in particular from 300 µm to 1000 µm, particularly preferably from 500 µm to 1000 µm, is used.

20. The use of a separation membrane as claimed in claim 19 for the filtration and/or separation of gases and/or liquids or in reverse osmosis.

21. An apparatus for the filtration and/or separation of gases and/or liquids comprising at least one separation membrane as claimed in claim 18.

22. An apparatus for carrying out reverse osmosis comprising at least one separation membrane as claimed in claim 18.

## Revendications

1. Feuille polymère à base de polyazoles pouvant être obtenue par un procédé comprenant les étapes de
A) dissolution du polymère de polyazole dans un solvant organique aprotique polaire,
B) coulée d'une feuille polymère avec la solution obtenue dans l'étape A),
C) séchage de la feuille formée dans l'étape B) jusqu'à ce qu'elle doit autoporteuse, **caractérisée en ce que**, dans l'étape A), une poudre de polymère de polyazole ayant une taille de particule dans le domaine de 300 µm à 1 500 µm est utilisée.

2. Feuille polymère selon la revendication 1, **caractérisée en ce qu'**une poudre de polymère de polyazole ayant une taille de particule de 300 µm à 1 250 µm, en particulier de 300 µm à 1 000 µm, de manière particulièrement préférée de 500 µm à 1 000 µm, est utilisée.

3. Feuille polymère selon la revendication 1 ou 2, **caractérisée en ce que** l'on utilise comme polymères à base de polyazoles des polymères contenant des unités azoles répétées de formules générales (I) et/ou (II) 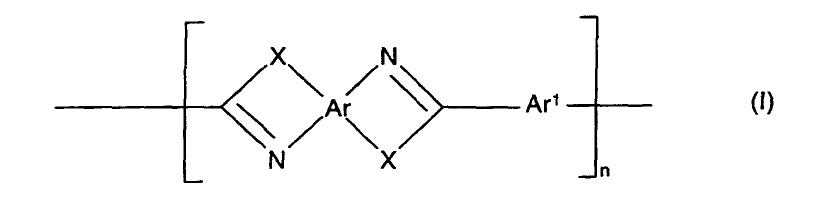 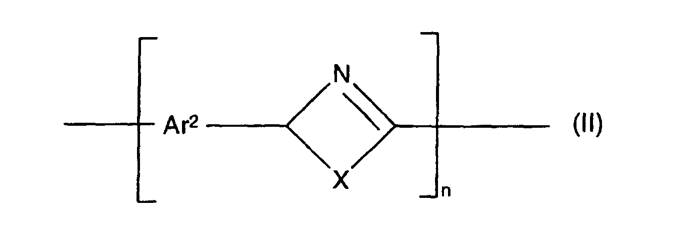 où
les Ar sont identiques ou différents et représentent un groupe aromatique ou hétéroaromatique tétravalent qui peut être à un ou plusieurs noyaux, les AR¹ sont identiques ou différents et représentent un groupe aromatique ou hétéroaromatique divalent, qui peut être à un ou plusieurs noyaux,
les Ar² sont identiques ou différents et représentent un groupe aromatique ou hétéroaromatique trivalent qui peut être à un ou plusieurs noyaux,
les X sont identiques ou différents et représentent l'oxygène, le soufre ou un groupe amino qui porte un atome d'hydrogène, un groupe comportant 1-20 atomes de carbone, de préférence un groupe alkyle ou alcoxy ramifié ou non ramifié, ou un groupe aryle comme groupement supplémentaire.

4. Feuille polymère selon la revendication 3, **caractérisée en ce que** l'on utilise comme polymères à base de polyazoles des polymères contenant des unités de benzimidazole répétées selon la formule (III) : 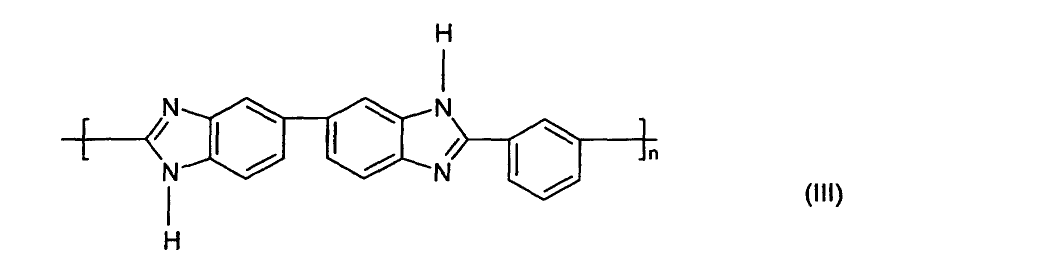 où
n est un nombre entier supérieur ou égal à 10, de préférence supérieur ou égal à 100.

5. Feuille polymère selon l'une des revendications 1 à 4, **caractérisée en ce que** le séchage de la feuille dans l'étape C) se déroule à des températures entre la température ambiante et 300°C.

6. Feuille polymère selon l'une des revendications 1 à 4, **caractérisée en ce que** le séchage de la feuille dans l'étape C) se déroule pendant une durée de 10 s à 24 h.

7. Membrane polymère dopée à base de polyazoles pouvant être obtenue par un procédé comprenant les étapes de
A) dissolution du polymère de polyazole dans un solvant organique aprotique polaire,
B) coulée d'une feuille polymère avec la solution obtenue dans l'étape A),
C) séchage de la feuille formée dans l'étape B) jusqu'à ce qu'elle soit autoporteuse,
D) dopage de la feuille polymère obtenue selon l'étape C) avec un agent dopant, **caractérisée en ce que**, dans l'étape A), une poudre de polymère de polyazole ayant une taille de particule dans le domaine de 300 µm à 1 500 µm est utilisée.

8. Membrane polymère selon la revendication 7, **caractérisée en ce que** l'on utilise une poudre de polymère de polyazole ayant une taille de particule dans le domaine de 300 µm à 1 250 µm, en particulier de 300 µm à 1 000 µm, de manière particulièrement préférée de 500 µm à 1 000 µm.

9. Membrane polymère selon la revendication 7 ou 8, **caractérisée en ce que** l'on utilise comme polymères à base de polyazoles des polymères contenant des unités azoles répétées de formules générales (I) et/ou (II) 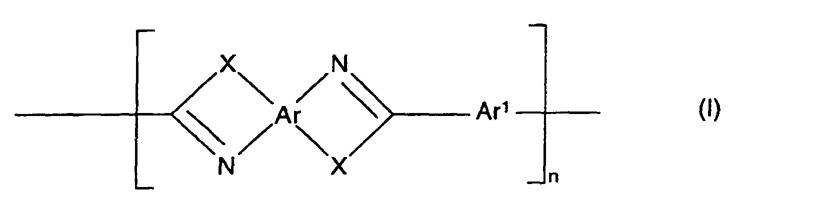 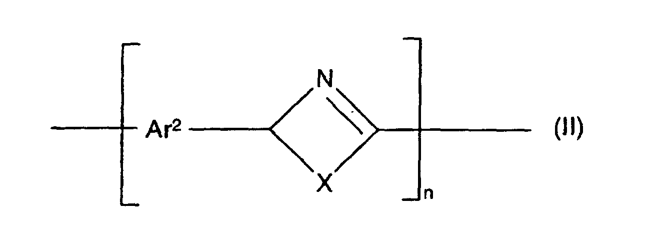 où
les Ar sont identiques ou différents et représentent un groupe aromatique ou hétéroaromatique tétravalent qui peut être à un ou plusieurs noyaux, les AR¹ sont identiques ou différents et représentent un groupe aromatique ou hétéroaromatique divalent, qui peut être à un ou plusieurs noyaux,
les Ar² sont identiques ou différents et représentent un groupe aromatique ou hétéroaromatique trivalent qui peut être à un ou plusieurs noyaux,
les X sont identiques ou différents et représentent l'oxygène, le soufre ou un groupe amino qui porte un atome d'hydrogène, un groupe comportant 1-20 atomes de carbone, de préférence un groupe alkyle ou alcoxy ramifié ou non ramifié, ou un groupe aryle comme groupement supplémentaire.

10. Membrane polymère selon la revendication 7, **caractérisée en ce que** l'on utilise comme polymères à base de polyazoles des polymères contenant des unités de benzimidazole répétées selon la formule (III) 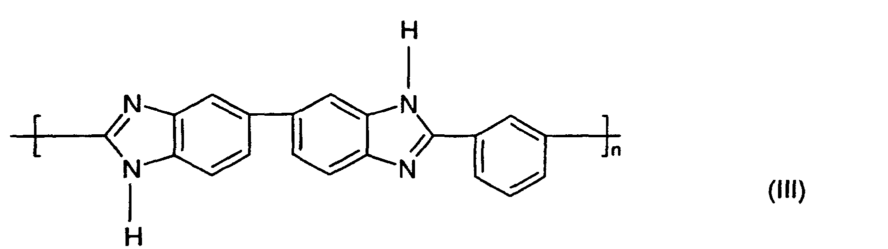 où
n est un nombre entier supérieur ou égal à 10, de préférence supérieur ou égal à 100.

11. Membrane polymère selon l'une des revendications 7 à 10, **caractérisée en ce que** le séchage de la feuille dans l'étape C) se déroule à des températures entre la température ambiante et 300°C.

12. Membrane polymère selon l'une des revendications 7 à 10, **caractérisée en ce que** le séchage de la feuille dans l'étape C) se déroule pendant une durée de 10 s à 24 h.

13. Membrane polymère selon l'une des revendications 7 à 10, **caractérisée en ce que** le dopage se déroule pendant une durée de 5 min à 96 h.

14. Membrane polymère selon l'une des revendications 7 à 10, **caractérisée en ce que** le degré de dopage est de 3 à 15 mol d'acide par mole d'unité répétée du polymère.

15. Membrane polymère selon l'une des revendications 7 à 14, **caractérisée en ce que** l'acide sulfurique ou l'acide phosphorique est utilisé comme agent dopant.

16. Unité d'électrode à membrane qui comporte au moins une membrane polymère selon l'une des revendications 7 à 15 et au moins une électrode.

17. Pile à combustible à électrolyte polymère qui comporte au moins une unité d'électrode à membrane selon la revendication 16.

18. Membranes de séparation à base de polyazoles pouvant être obtenues par un procédé comprenant des étapes de
A) dissolution du polymère de polyazole dans un solvant organique aprotique polaire,
B) coulée d'une feuille polymère avec la solution obtenue dans l'étape A),
C) immersion de cette feuille dans un bain de précipitation, **caractérisées en ce que**, dans l'étape A), une poudre de polymère de polyazole ayant une taille de particule dans le domaine de 300 µm à 1 500 µm est utilisée.

19. Membrane de séparation selon la revendication 18, **caractérisée en ce que** l'on utilise une poudre de polymère de polyazole ayant une taille de particule dans le domaine de 300 µm à 1 250 µm, en particulier de 300 µm à 1 000 µm, de manière particulièrement préférée de 500 µm à 1 000 µm.

20. Utilisation de la membrane de séparation selon la revendication 19 pour la filtration et/ou la séparation de gaz et/ou de liquides ou en osmose inverse.

21. Dispositif pour la filtration et/ou la séparation de gaz et/ou de liquides contenant au moins une membrane de séparation selon la revendication 18.

22. Dispositif pour la mise en oeuvre d'une osmose inverse contenant au moins une membrane de séparation selon la revendication 18.
